# EUROPEAN PATENT APPLICATION

(11) **EP 2 711 564 A2**
(43) Date of publication of application: **26.03.2014**
(21) Application number: 13182888.1
(22) Date of filing: 03.09.2013
(51) Int. Cl.: F16B 5/02, F16B 35/04, F16B 37/00, F16B 21/09

(54) **Quick release clamp**

(30) Priority: 21.09.2012 GB 201217045
(71) Applicant: Bio Pure Technology Ltd, Horndean Hampshire PO8 9JU (GB)
(72) Inventor: Maunder, Roy Peter, Lovedean, Hampshire PO8 9SS (GB)
(74) Representative: Brooks, Nigel Samuel

(57) **Abstract**

A clamp having a pair of clamping arms 12, 14 hinged together at one end and connectable together at the other end by means of a screw 1 and nut 4. The screw 1 has a main threaded section 2 for tightening of the nut 4 onto a seat 40 on an arm 14. It also has an unthreaded section of shaft, over which the nut 4 can move freely. At the distal end of the screw 1 is a further short threaded section 6, to retain the nut 4 on the screw 1, when disconnected from the main threaded section 2. The nut 4 can be removed totally from the screw 1 by engaging with the short threaded section 2, and rotating to disengage. The other end of one arm 12 having a clevis 24 into which a crossbar 28 on the screw 1 connects, the other arm 14 also having a clevis 36 into which the screw 1 pivotally fits, the upper surface of the clevis 36 providing a seat for the nut 4.

## Description

The present invention relates to a nut and screw combination that is quick release but also nut retaining, particularly though not exclusively for use in a clamp.

Bio-disposal systems for the food, medical and pharmaceutical industries include clamps for forming connections between other pieces of apparatus. These clamps comprise a pair of generally semi-circular tangs, hinged together at one end and connectable together at the other end by means of a screw and nut. The tangs having an inwards facing tapered groove for drawing two flanged connectors into sealing engagement, typically with a gasket therebetween. The screw has a cross-head for engaging in a clevis in one of the tangs. The other tang also has a clevis for receiving the screw and providing a seat for the nut. The seat and nut have complementary conical formations for restraining the clevis from spreading as the nut is tightened. Usually the clevis of the first tang also has a cross-piece distal of the tang to allow limited pivotal movement of the screw from its engaged but unconnected position.

To use such a clamp an operator has to unscrew the nut sufficiently far along the screw to allow the screw and nut combination to pivot out of the clevis in each tang, to allow the clamp to open at its hinge. The clamp is then placed around a pair of flanges, the screw positioned back between the clevis and the nut re-tightened. The clevis has to be sufficiently long to provide a seat for the nut, and as such the nut has to be moved some distance along the screw to enable it to clear the end of the clevis, when pivoted into or out of the clevis. When this is repeated for many clamps, the opening and closing of the nuts on the screws can be time consuming and potentially can cause repetitive strain injury.

The object of the present invention is to provide an improved and quicker release nut and screw combination.

According to the invention there is provided a nut and screw combination for a clamp or the like, including:-
- a nut having an internal screw thread; and
- a screw having:
   - a short section of complementary thread at the distal end of its shaft for retention of the nut;
   - a main section of complementary thread along its shaft to enable the nut to be tightened onto a seat; and
   - an unthreaded section of shaft separating the short thread and the main thread, enabling the nut to move freely along this section of shaft.

Thus the nut can be retained on the screw by the short thread, and can move freely along the unthreaded shaft. It can then be tightened onto a seat using the main thread with a small number of turns of the screw. To undo the clamp quickly, a small number of turns of the nut releases the nut from the main thread, it can then move along the unthreaded section of the shaft to move away from the seat. It is however held on the shaft by the short thread, although it could still be removed by further turns of the nut.

Preferably the nut is closed at its distal end, having a short internal thread at its proximal end.

Conveniently the main thread may be a two-start thread, making connection with the thread on the nut quicker to find.

According to a second aspect of the invention there is provided a clamp including a pair of clamping arms, hinged together at one end and connectable together at the other end by means of the nut and screw combination of the first aspect.

Preferably the screw includes a crossbar for engaging in a clevis in one of the tangs.

The other tang will usually also have a clevis for receiving the screw and providing a seat.

Advantageously, the nut and seat are provided with complementary formations for mating the nut onto the seat. Typically the seat will be provided with projections with the nut having complementary recesses.

To help understanding of the invention, a specific embodiment thereof will now be described by way of example and with reference to the accompanying drawings, in which:
Figure 1 is a front view of a screw and nut according to the invention;
Figure 2 is a cross-sectional view of a clamp incorporating the screw and nut according to the invention; and
Figure 3 is a cross-sectional view of the clamp of Figure 3 with the nut loose but captive on the screw.

Referring to the Figures, a connection for a clamp or the like is provided including a screw 1 having a main thread 2 onto which a nut 4 can engage for tightening onto a seat, and a retaining thread 6, which will retain the nut on the shaft 8 of the screw 1. Between the two threads 2, 6, is an unthreaded portion 10 of the shaft 8, along which the nut can move freely, to distance the nut from the main threaded section.

An example of a device incorporating this invention will now be described.

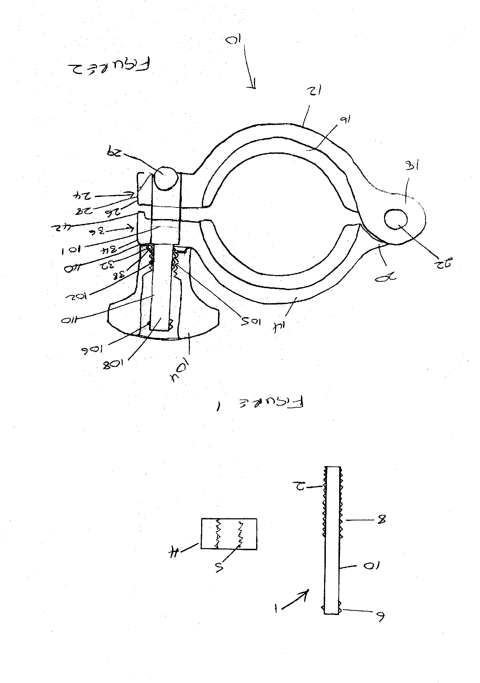

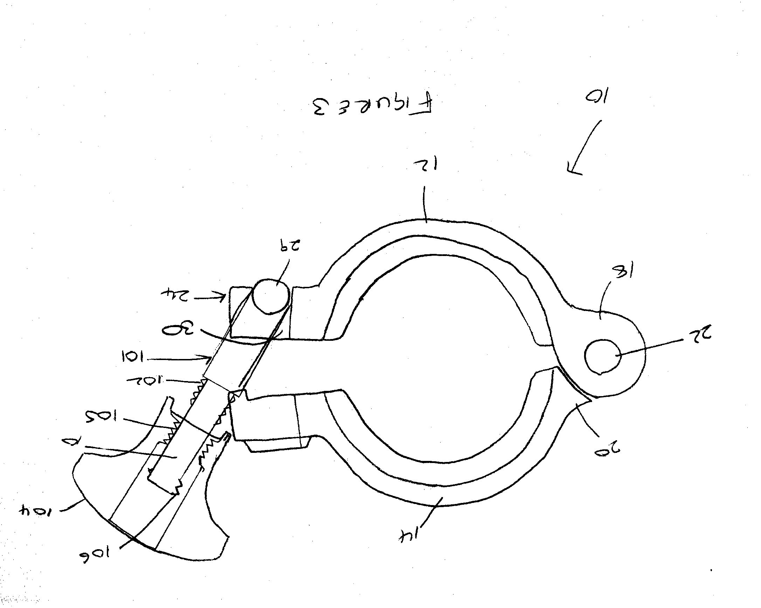

Figures 2 and 3 show a clamp 10 including a pair of substantially semi-circular tangs 12, 14. The tangs have a tapered groove 16 running around the inside of them, to engage the flanges of a pair of flanged connectors with a seal therebetween, not shown, holding the connectors in sealing relationship with each other.

The first ends 18, 20 of the tangs are held together by a pin 22 allowing the tangs to pivot in relation to each other for positioning around the connectors. Other means of connecting the tangs may alternatively be used.

The second end of the tangs are held together by the nut 4 and screw 1 arrangement of the present invention.

One tang 12 has a clevis 24 defined by two lugs 26. Each has an overhung recess into which a cross-head 18 of the screw 1 clips. A crossbar 28 connects the lugs 26 remote from their tang, whereby the screw is limited in its angular displacement about the recess 30 defined by the tang, the lugs and the crossbar. The crossbar also stabilises the lugs against relative displacement under load when the nut is tightened.

The other tang 14 has a part conical formation 32 on lugs 34 defining a clevis 36 similar to that 24 on the first tang 12. The nut 104 has complementary conical recesses 38. Engagement of the formation 32 in the recess 38 restrains the lugs from separating under load as the nut is tightened. As the nut is tightened onto the seat 40, formed by the lugs 34 mutual approach of the tangs is limited by projections 42 on the lugs 34 to avoid overtightening.

According to the invention the screw 1 has a main thread 2 extending from above the cross-head 18 to a position just above the seat 40. The unthreaded shaft portion 10 of the shaft 8 then extends a short distance, to provide sufficient distance between the lugs 34 and the nut 104 to allow the screw 1 to pivot out of the clevis, releasing the clamp. The unthreaded section being of a sufficiently small diameter to enable the nut to move freely thereon. A short section of a second screw thread 6 is provided at the distal end of the shaft 8. This is to retain the nut on the shaft, when disconnected from the main thread 2, and moving freely on the unthreaded portion 10. The nut 104 can be removed from the shaft by engaging the internal thread 5 of the nut 104 with the second thread 6 and rotating.

For ease of connection between the main thread 2 and the internal thread on the screw 5, the main thread is provided as a two-start thread. However, a single start or even a three-start thread could be used.

For the clamp shown in the embodiment, the nut 4 will be a closed wing nut 104. It will be provided with a short section of complementary internal thread, substantially at its open end. The upper internal section of the nut being unthreaded, and having a sufficient diameter to allow the retaining threaded section 6 of the screw 1 to move freely. The nut will also be of a sufficient length to enclose the screw when tightened onto the seat. This provides a screw that is large enough to handle with ease even on small clamps.

The invention is not intended to be restricted to the details of the above-described embodiment. For instance, this connected nut and screw arrangement can be used on any form of clamp, including a pinch clamp.

## Claims

1. A nut and screw combination for a clamp or the like, including:-
• a nut having an internal screw thread; and
• a screw having:
• a short section of complementary thread at its distal end for retention of the nut and
• a main section of complementary thread along its body to enable the nut to be tightened onto a seat and
• an unthreaded section of shaft separating the short thread and the main thread, enabling the nut to move freely along this section of shaft.

2. A nut and screw combination as claimed in claim 1 wherein the nut is closed at its distal end, having a short internal thread at its proximal end.

3. A nut and screw combination as claimed in claim 1 or claim 2, wherein the main thread is a two-start thread, making connection with the thread on the nut quicker to find.

4. A clamp including a pair of clamping arms, hinged together at one end and connectable together at the other end by means of the nut and screw combination of claim 1.

5. A clamp as claimed in claim 4, wherein the screw includes a crossbar for engaging in a clevis in one of the tangs.

6. A clamp as claimed in claim 4 or claim 5, wherein the other tang also has a clevis for receiving the screw and providing a seat.

7. A clamp as claimed in claim 4, claim 5 or claim 6, wherein the nut and seat are provided with complementary formations for mating the nut onto the seat.

8. A clamp as claimed in claim 7, wherein the seat has projections and the nut has complementary recesses.
